# EUROPÄISCHE PATENTANMELDUNG

(11) **EP 0 594 069 A1**
(43) Veröffentlichungstag der Anmeldung: **27.04.1994**
(21) Anmeldenummer: 93116670.6
(22) Anmeldetag: 15.10.1993
(51) Int. Cl.: B60P 3/025

(54) **Transportables, begehbares Gehäuse**

(30) Priorität: 20.10.1992 DE 4235287
(71) Anmelder: Schuster, Heinz, D-87568 Hirschegg/Kleinwalsertal (DE)
(72) Erfinder: Schuster, Heinz, D-87568 Hirschegg/Kleinwalsertal (DE)
(74) Vertreter: Hübner, Hans-Joachim, Dipl.-Ing.

(57) **Zusammenfassung**

Ein transportables, begehbares Gehäuse (10) ist auf einem Fahrgestell (16) befestigt, wobei der Gehäuseboden ein rechteckförmiges Mittelteil sowie beidseitig an dieses an gesetzte gleichlange etwa kreissegmentförmige Seitenteile (24) aufweist, die in der Funktionsstellung des Gehäuses (10) in die Ebene des Mittelteils nach unten abgeklappt sind, für Transportzwecke jedoch um etwa 90° nach oben in wenigstens angenäherte Vertikalstellungen hochklappbar sind. Das Gehäuse (10) weist vier Diagonal-Streben auf, die zu einem zentralen Decken-Tragring (34) führen, in den abnehmbare seitliche Wandelemente einhängbar sind.

## Beschreibung

Die Erfindung betrifft ein transportables, begehbares Gehäuse nach dem Oberbegriff von Patentanspruch 1.

Aus dem DE-U 86 13 697 ist ein derartiges Gehäuse als mobiler Verkaufsstand bekannt, der einen Zentralpfosten und eine Anzahl Außenpfosten zum Abstützen von Deckenstützen aufweist, die ihrerseits eine flexible Dachhaut tragen.

Aufgabe der Erfindung ist es, ein zerlegbares wetterfestes Gehäuse mit wenigstens teilweise selbsttragendem Aufbau zu schaffen, der unter Vermeidung von Stützpfosten eine schnelle Montage und Demontage erlaubt und leicht transportabel ist.

Diese Aufgabe wird erfindungsgemäß durch die Merkmale des Kennzeichnungsteils von Patentanspruch 1 gelöst.

Im einfachsten Fall ist die Bodeneinheit dreiteilig. Das Mittelteil hat eine, für den Straßentranport zulässige Breite von z.B. 2,40m. Die Länge des Mittelteils beträgt das 2- bis etwa 3-fache seiner Breite. Die Seitenteile haben eine mit dem Mittelteil im wesentlichen gleiche Länge. Sie haben wenigstens angenähert die Form eines Kreissegmentes und ihre größte mittlere Breite beträgt etwa 60% der Breite des Mittelteils. Für den Transport können die beiden Seitenteile flach liegend oder aufrecht stehend auf dem Mittelteil angeordnet werden. Im ersten Fall sind sie als separate Platten ausgeführt, die nach entsprechender Schaffung der Abstützung in der Ebene des Mitteilteils und seitlich unmittelbar anschließend montiert werden. Hinsichtlich des zweiten Falles besteht eine bevorzugte Ausgestaltung darin, daß die Seitenteile an ihren Längsrändern mit dem Mittelteil schwenkbar verbunden sind und aus ihren, in der Ebene des Mittelteils befindlichen Funktionsstellungen nach oben in im wesentlichen vertikale Transportstellungen hochklappbar sind, wo sie an einem passenden Gestänge verankert werden können.

Vorzugsweise ist das Mittelteil der Bodeneinheit auf einem Fahrgestell befestigt. Zwei Ausführungen liegen dann im Rahmen der Erfindung. Entweder bildet die Bodeneinheit mit dem Fahrgestell eine unlösbare Baueinheit oder die Bodeneinheit läßt sich vom Fahrgestell lösen, sodaß das Gehäuse auch an nicht befahrbaren Plätzen aufgestellt werden kann. In diesem Fall wird ein Unterbaurahmen aus Einzelteilen montiert, der unmittelbar auf dem Aufstellplatz aufgelegt wird. Die Bodeneinheit wird dann auf diesem Unterbaurahmen aufgelegt und gegen Verschieben gesichert. Eine besonders schnelle Montage des iglu-artigen Gehäuses ist jedoch mittels des integrierten Fahrgestelles möglich. Die Seitenteile sind dann gemäß einer vorteilhaften Ausgestaltung je mittels in einem Bodenrahmen des Mittelteils gelagerter auskragender Tragrohre und/oder mittels Bodenstützen in ihren Funktionsstellungen abgestützt. Vorzugsweise weist der Bodenrahmen quer verlaufende Hohlprofile auf, die das Mittelteil der Bodeneinheit abstützen. In diesen Hohlprofilen sind dann die Tragrohre teleskopartig ausziehbar gelagert, die der Abstützung der Seitenteile dienen.

Dank der Erfindung bilden die Wandelemente einen weitgehend selbsttragenden Aufbau. Zwar werden vorzugsweise 4 Diagonalstreben dem Mittelteil zugeordnet, die jedoch hauptsächlich den nicht zerlegbaren Eingangsbereich abstützen und stabilisieren.

Die am Außenrand der beiden Seitenteile ansetzenden Wandelemente sind vorzugsweise identisch ausgebildet und liegen wenigstens angenähert auf ein- und derselben Kugeloberfläche. Die Wandelemente sind in diesem Fall sowohl in Längsrichtung als auch in Querrichtung gekrümmt.

Dabei liegt es im Rahmen der Erfindung, die Wandelemente auch einfacher auszubilden, nämlich derart, daß sie nur in Längsrichtung gekrümmt sind und statt dieser gleichmäßigen Krümmung in Längsrichtung könnte auch eine mehrfache Abwinklung vorgesehen werden, sodaß jedes Wandelement sich aus mehreren ebenen Abschnitten zusammensetzt.

Ein weiteres wichtiges Merkmal besteht nun darin, daß der Deckenzentralbereich von einem Tragring begrenzt wird, der von mindestens vier gebogenen, von den Enden der Längsränder des Mittelteils ausgehenden und in der Draufsicht längs Diagonalen verlaufenden Diagonal-Streben abgestützt ist, die elektrische Leitungen für Beleuchtung und Lautsprecher enthalten.

Gemäß einer Ausführungsform kann dieses Deckengerüst separate an Ort und Stelle montierbare Diagonalstreben aufweisen, bevorzugt wird jedoch eine Ausführung, bei der das Deckengerüst fester Bestandteil des Mittelteils ist, also in der Transportstellung unverändert erhalten bleibt. Damit werden zwei Vorteile gewonnen. Einmal erlaubt die Ausbildung eine wesentlich schnellere Montage und Demontage des Gehäuses und zum anderen können nun zwischen den beiden vorderen und den beiden hinteren Diagonal-Streben je eine, von einem Querrand des Mittelteils nach oben und innen zum Deckenzentralbereich führende Frontwand angeordnet werden, wobei wenigstens eine der Frontwände einen vertikalen Türrahmen mit Eingangstür aufweist. Diese Frontwände mit ihren Einbauten bleiben dann ebenfalls in der Transportstellung erhalten. Sie versteifen das Traggerüst und die Diagonal-Streben erlauben weiterhin eine feste Verlegung von elektrischen Leitungen.

Die Wandelemente bestehen je aus einem Rahmen, der von einer durchsichtigen Kunststoffläche ausgespannt ist, wobei der Rahmen zwei im wesentlichen längs Kugelmeridianen verlaufende Längsschenkel sowie deren Enden miteinander verbindende Querschenkel aufweist und wobei der obere kürzere Querschenkel Haken zum Einhängen des Wandelementes in den Tragring aufweist und der untere längere Querschenkel am Außenrand des jeweiligen Seitenteils mittels einer Steckverbindung verankerbar ist. Die Kunststoffläche des Wandelementes besteht vorzugsweise aus einer glasklaren Kunststoffplatte aus hochwertigem Kunststoff, die elastisch in die gewünschte Wölbungsoberflächenform gebogen ist.

Die erfindungsgemäße Ausbildung des Gehäuses erlaubt somit einen einfachen Transport zum Ort und eine äußerst schnelle Montage, denn es brauchen lediglich Tragrohre aus dem Bodenrahmen ausgezogen und vorzugsweise mittels Bodenstützen positioniert zu werden, wonach die beiden Seitenteile in die Ebene des Mittelteils herabgeklappt werden. Dann brauchen lediglich noch die Wandelemente montiert zu werden, die lediglich am Tragring oben eingehängt und mit am unteren Querschenkel vorgesehenen Steckbolzen in entsprechende Löcher der Seitenteile eingesteckt werden. Die paarweise nebeneinander liegenden Längsschenkel zweier benachbarter Wandelemente werden dann durch jeweils eine Abdeckleiste miteinander verbunden. Wenn die Haken an den oberen Enden der Wandelemente nach unten offen sind, so werden die Haken der Abdeckleisten vorzugsweise mit einem sich nach oben öffnenden Maul versehen. Diese Haken untergreifen also den Tragring und da die Abdeckleisten ihrerseits die jeweils benachbarten Wandelemente übergreifen, verhindern sie bei Starkwind ein Abheben der Wandelemente. Die Haken der Wandelemente können aber auch U-förmig ausgebildet sein, sodaß sie den Tragring sowohl über-als auch untergreifen. Sie sind dann auch ohne die Deckleisten lagegesichert.

Im fertigen Zustand hat das Gehäuse einen Durchmesser von etwa 6 m und eine lichte Höhe von 3 bis 3,70m. Im Inneren befindet sich eine für die jeweilige Nutzung passende Einrichtung.

Es versteht sich, daß die durch den Tragring gebildete Deckenöffnung mittels einer Haube abgedeckt wird, sodaß das Gehäuse regendicht ist. Diese Abdeckung, die vorzugsweise noch mit einem Ventilator kombiniert ist, kann entweder fester Bestandteil des Deckengerüstes sein oder vorzugsweise als Einschubteil ausgebildet sein, das nach dem Einhängen der Wandelemente von oben eingesetzt wird und die Haken der Wandelemente sowie diejenigen der Abdeckleisten am Tragring verriegelt.

Anhand der Zeichnung, die ein Ausführungsbeispiel darstellt, wird die Erfindung näher beschrieben.

Es zeigt:
- FIG. 1: eine Seitenansicht des begehbaren Gehäuses auf einem Fahrgestell,
- FIG. 2: eine Draufsicht auf das Gehäuse ohne Fahrgestell,
- FIG. 3: eine Draufsicht ähnlich FIG. 2, jedoch mit einem Einblick in das Innere des Gehäuses,
- FIG. 4: die Draufsicht auf ein separates Fahrgestell in Form eines PKW-Anhängers, mit dem das Gehäuse transportiert werden kann,
- FIG. 5: eine dreidimensionale Ansicht des auf einem Anhänger befestigten Gehäuses in der Transportstellung,
- FIG. 6: eine Seitenansicht des fahrbaren Gehäuses in der Transportstellung,
- FIG. 7: eine Draufsicht auf eine Hälfte der Bodeneinheit des Gehäuses in der Funktionsstellung,
- FIG. 8: eine Ansicht eines Wandelementes,
- FIG. 9: eine Ansicht von zwei benachbart angeordneten und im deckenseitigen Tragring eingehängten Wandelementen,
- FIG. 10: eine Abdeckleiste, die den Spalt zwischen zwei benachbarten Wandelementen schließt,
- FIG. 11: eine Schnittansicht der Stoßstelle zwischen zwei benachbarten Wandelementen mit einer Ausführungsform einer Abdeckleiste und
- FIG. 12: eine Schnittdarstellung ähnlich FIG. 11, jedoch mit Darstellung einer abgewandelten Ausführungsform der Abdeckleiste.

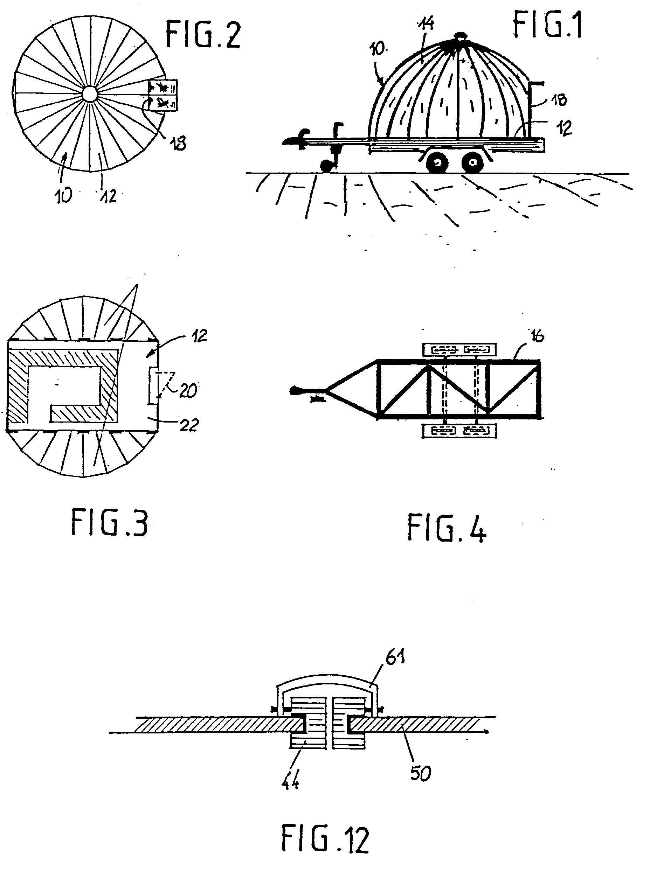

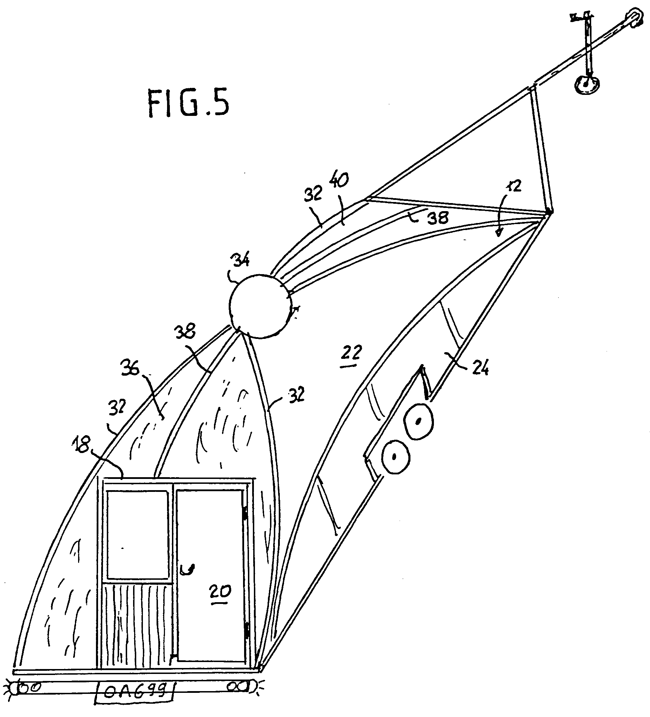

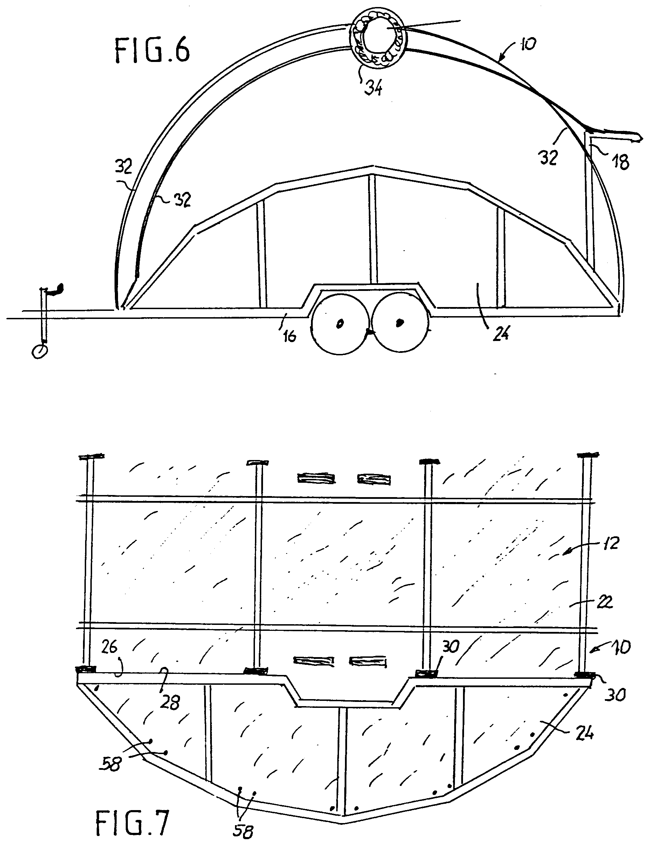

Das Gehäuse 10 gemäß FIG. 1 weist eine etwa kreisförmige, jedoch an beiden gegenüberliegenden Stirnseiten abgeflachte Bodeneinheit 12 sowie einen etwa halbkugelförmigen oder kuppelartigen Aufbau 14 auf. Die Bodeneinheit 12 ist auf einem in FIG. 4 dargestellten Fahrgestell 16 in Form eines PKW-Anhängers befestigt. An der Heckseite des Anhängers befindet sich im Aufbau 14 ein Türrahmen 18 mit Eingangstür 20. Auf einem rechteckförmigen länglichen Mittelteil 22 der Bodeneinheit 12 ist, wie sich aus FIG. 3 ergibt, eine Möbeleinrichtung angeordnet. Wie sich am besten aus FIG. 7 ergibt, besteht die Bodeneinheit 12 aus dem schon genannten rechteckförmig konturierten länglichen Mittelteil 22 und zwei etwa kreissegmentförmigen Seitenteilen 24. Die Längsränder des Mittelteils 22 und der beiden Seitenteile 24 sind gleich lang und komplementär ausgebildet, sodaß die Teile lückenlos in einer Ebene aneinandergesetzt werden können und einen durchgehenden Boden bilden. Der Außenrand der Seitenteile 24 ist in diesem Ausführungsbeispiel polygonartig ausgebildet. Am Längsrand 26 des Mittelteils 22 befinden sich einige Klappscharniere 30, mit denen die Seitenteile 24 an ihren Längsrändern 28 am Mittelteil 22 schwenkbar verbunden sind. Die Figuren 5 und 6 zeigen die Seitenteile 24 in der aufgestellten, d.h. vertikal nach oben geklappten Transportstellung.

Von den vier Ecken des rechteckförmigen Mittelteils 22 der Bodeneinheit 12 laufen Diagonal-Streben 32 nach oben und innen und sind mit einem zentralen Tragring 34 fest verbunden. Diese Diagonal-Streben 32 liegen paarweise in einander kreuzenden vertikalen Diagonalebenen. Bodenseitig sind die Diagonal-Streben am Mittelteil 22 oder dessen Traggestell befestigt, sodaß diese vier Diagonal-Streben ein bodenfestes stabiles Traggerüst bilden. Zwischen den beiden heckseitigen Diagonal-Streben 32 ist eine feste Heckwand 36 montiert, die den Türrahmen 18 enthält, der zusätzlich noch durch eine Mittelstrebe 38 gestützt wird, die ebenfalls oben am Tragring 34 befestigt ist. Der Türrahmen 18 ist weiterhin mittels nicht dargestellter Seitenstreben mit den Diagonal-Streben 32 verbunden. Die Heckwand 36 besteht aus zwei doppelt gewölbten glasklaren Kunststoffplatten, die jeweils zwischen einer Diagonal-Strebe 32 und einer Mittelstrebe 38 sowie dem Türrahmen und dem Bodenmittelteil 22 befestigt sind.Das Dachgerüst weist auch frontseitig eine feste Stirnwand 40 auf, die aus zwei doppelt gewölbten Kunststoffplatten besteht, die jeweils zwischen einer Diagonal-Strebe 32 und einer Mittelstrebe 38 eingesetzt sind.

Im Transportzustand gemäß FIG. 5 ist das Gehäuse vorn und hinten durch die beiden Wände 40, 36 geschlossen und die beiden Boden- Seitenteile 24 befinden sich in aufrechter Stellung und sind in geeigneter Weise z.B. mittels nicht dargestellter Verbindungsschellen an den Diagonal-Streben 32 arretiert. Im Inneren lagern auf dem Mittelteil 22 noch weitere Wandelemente, die nachstehend noch beschrieben werden sowie Abdeckleisten. Über das Dachgerüst ist dann eine nicht dargestellte Plane gezogen.

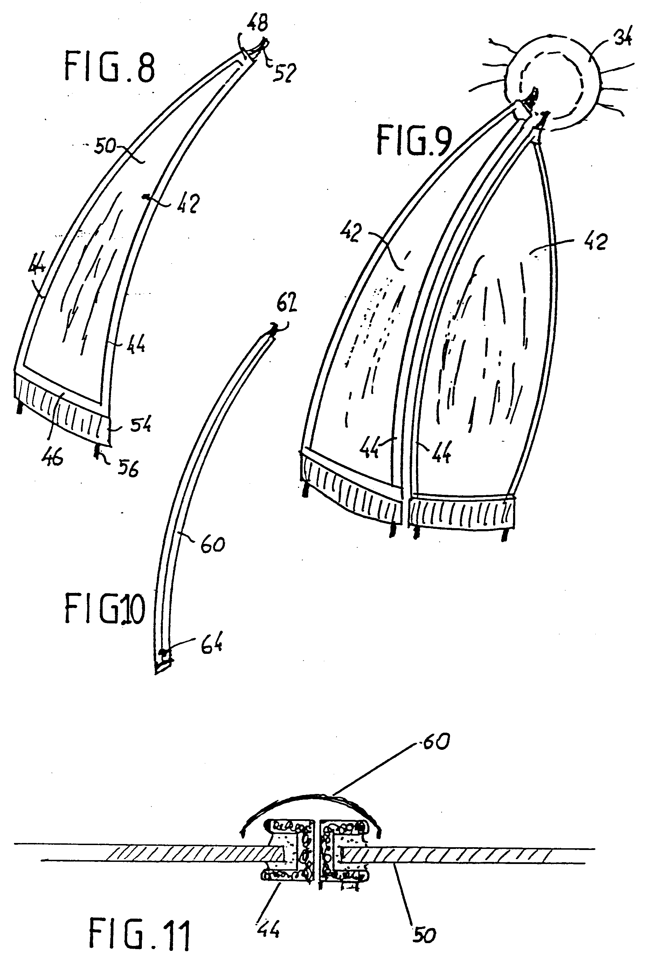

Die Figuren 8 und 9 zeigen die noch benötigten Wandelemente 42, um den Aufbau 14 in der Funktionsstellung des Gehäuses 10 zu vervollständigen. Jedes Wandelement 42 besteht aus einem Aluminiumrahmen mit zwei etwa längs Kugelmeridianen verlaufenden Längsschenkeln 44, die an ihren unteren Enden durch einen geraden Querschenkel 46 und am oberen Ende durch einen wesentlich kürzeren Querschenkel 48 miteinander verbunden sind. Auch der obere Querschenkel 48 ist hier gerade ausgebildet, sodaß der geschlossene Rahmen von einer einfach gekrümmten glasklaren Kunststoffplatte 50 ausgespannt werden kann.

In einer alternativen Ausführungsform ist mindestens der bodenseitige Querschenkel 46 ebenfalls gekrümmt, sodaß die Kunststoffplatte 50 sowohl in vertikaler Richtung als auch in Umfangsrichtung gewölbt ist.

Am oberen Querschenkel 48 des Wandelementes 42 befindet sich ein Haken 52, der ein nach unten geöffnetes Maul hat. Mit diesem Haken 52 wird das Wandelement 42 auf den Tragring 34 aufgehängt. Vom unteren Querschenkel 46 bzw. einer daran befestigten festen Schürze 54 stehen zwei Bolzen 56 nach unten, die zum Einstecken in Löcher 58 bestimmt sind, welche längs des Außenrandes der Seitenteile 24 in passenden Abständen im Seitenteil 24 vorgesehen sind. Fünf oder sechs solcher Wandelemente 42 werden auf jeder Seite des Dachgerüstes lediglich durch Einhängen im Tragring 34 und durch Einstecken der Bolzen 56 in die Löcher 58 montiert. Benachbarte Längsschenkel 44 jeweils zweier Wandelemente 42 werden dann mit einer Abdeckleiste 60 abgedeckt, die entsprechend den Längsschenkeln 44 gewölbt ist und am oberen Ende einen Haken 62 aufweist, der ein nach oben geöffnetes Maul hat. Dieser Haken 62 untergreift also den Tragring 34 und legt sich dann beim Abwärtsschwenken auf die benachbarten Längsschenkel 44 der Wandelemente 42 auf. Am unteren Ende der Abdeckleiste 60 befindet sich eine Bohrung 64, durch die eine Schraube hindurchgreift, mit der die Abdeckleiste seitlich am Seitenteil 24 festgeschraubt wird. Die Abdeckleisten 60 verhindern also das Eindringen von Regenwasser in das Gehäuse und schützen die Wandelemente 42 vor einem Abheben bei Starkwind.

Die Abdeckleiste 61 gemäß FIG. 12 unterscheidet sich von der Abdeckleiste 60 gemäß FIG. 11 im wesentlichen dadurch, daß sie als Klemmleiste ausgebildet ist, um zwei benachbarte Wandelemente 42 miteinander zu verspannen. In diesem Ausführungsbeispiel hat die Abdeckleiste 61 ein etwa U-förmig gestaltetes Profil und in den beiden Schenkeln sind in Längsabständen Schrauben angeordnet, mit denen die Längsschenkel 44 der Wandelemente 42 gegeneinander gespannt werden können.

Wie sich aus FIG. 7 ergibt, liegen die Räder des Fahrgestells innerhalb des jeweiligen Längsrandes 26 des Mittelteils 22. Vorzugsweise weist das Mittelteil 22 entsprechende Durchtrittsöffnungen für die Räder auf, sodaß die Räder über das Boden-Mittelteil 22 nach oben vorstehen und das Mittelteil 22 deswegen sehr niedrig, nämlich dicht über den Achsen der Räder angeordnet werden kann. Diese Durchtrittsöffnungen für die Räder sind durch Radhauben geschlossen, die ihrerseits durch festmontierte Einbaumöbel verkleidet sind. Die Längsränder 26, 28 von Mittelteil 22 und Seitenteilen 24 können dann geradlinig durchlaufen.

## Patentansprüche

1. Transportables, begehbares Gehäuse (10) mit einer ggf. auf einem Fahrgestell befestigten Bodeneinheit (12) und einem an dieser befestigten Aufbau (14), der eine schließbare Zugangsöffnung aufweist, wobei die Bodeneinheit (12) im wesentlichen kreisförmig und/oder polygonartig konturiert ist und aus einem, zwei wenigstens abschnittsweise parallele Längsränder (26) aufweisenden länglichen Mittelteil (22) sowie zwei ggf. unterteilten Seitenteilen (24) zusammengesetzt ist, welche von je einem, mit den Längsrändern (26) des Mittelteils gleich langen, komplementären Längsrand (28) sowie einem kreisbogenförmigen oder- ähnlichen oder polygonzugartigen Außenrand konturiert sind, dadurch gekennzeichnet, daß der Aufbau (14) eine Anzahl gleich ausgebildeter und sich mit ihren Längsrändern wenigstens angenähert längs Kugelmeridianen erstreckender Wandelemente (42) aufweist, die sich je vom Außenrand der Seitenteile (24) nach oben und innen bis zu einem oberhalb der Mitte des Mittelteils (22) liegenden Deckenzentralbereich erstrecken, sich in der Breite nach oben verjüngen und an ihren Längsrändern paarweise miteinander lösbar verbunden sind.

2. Gehäuse nach Anspruch 1, dadurch gekennzeichnet, daß die Seitenteile (24) je mittels, in einem Bodenrahmen des Mittelteils (22) teleskopartig ausziehbarer Tragrohre und/oder mittels Bodenstützen in ihren Funktionsstellungen abgestützt sind.

3. Gehäuse nach Anspruch 1 oder 2, dadurch gekennzeichnet, daß der Deckenzentralbereich von einem Tragring (34) begrenzt wird, der von mindestens vier gebogenen von den Enden der Längsränder (26) des Mittelteils (22) ausgehenden und in der Draufsicht längs Diagonalen verlaufender Diagonal-Streben (32) abgestützt ist, die ein am Mittelteil (22) bzw. dessen Bodenrahmen befestigtes Deckengerüst bilden.

4. Gehäuse nach Anspruch 3, dadurch gekennzeichnet, daß zwischen den beiden vorderen und den beiden hinteren Diagonal-Streben (32) je eine, von einem Querrand des Mittelteils (22) nach oben und innen zum Deckenzentralbereich führende Frontwand (36;40) angeordnet ist und daß wenigstens eine der Frontwände (36, 40) einen vertikalen Türrahmen (18) mit Eingangstür (20) aufweist.

5. Gehäuse nach einem der Ansprüche 1 bis 4, dadurch gekennzeichnet, daß die Wandelemente (42) je aus einem Rahmen (44, 46) bestehen, der von einer durchsichtigen Kunststoffläche ausgespannt ist und daß der Rahmen (44, 46) zwei im wesentlichen längs Kugelmeridianen verlaufender Längsschenkel (44) sowie deren Enden miteinander verbindende Querschenkel (46, 48) aufweist, deren unterer Querschenkel (46) länger als der obere Querschenkel (48) ist und am Außenrand des jeweiligen Seitenteils (24) mittels einer Steckverbindung verankerbar ist.

6. Gehäuse nach Anspruch 5 , dadurch gekennzeichnet, daß die paarweise nebeneinander liegenden Längsschenkel (44) zweier benachbarter Wandelemente (42) durch eine Abdeckleiste (60; 61) übergriffen sind.

7. Gehäuse nach Anspruch 6, dadurch gekennzeichent, daß die Abdeckleiste (60; 61) zwei benachbarte Wandelemente (42) miteinander verankert.

8. Gehäuse nach einem der Ansprüche 3 bis 7, dadurch gekennzeichnet, daß die Wandelemente (42) und/oder die Abdeckleisten (60, 61) an ihren oberen Enden Haken (52, 62) aufweisen, mit denen sie im Tragring (34) eingehängt sind.

9. Gehäuse nach einem der Ansprüche 1 bis 8, dadurch gekennzeichnet, daß das Mittelteil (22) die Räder des Fahrgestells nach außen überragt und geradlinige Längsränder (26) aufweist, sowie Öffnungen besitzt, durch die die Räder nach oben hindurch ragen und daß die Öffnungen deckseitig von Radkästen geschlossen sind, die von einem Möbel verkleidet sind.

10. Gehäuse nach einem der Ansprüche 1-9, dadurch gekennzeichnet, daß in den Tragring (34) ein Ventilator eingehängt ist, der in einer Paßmuffe sitzt, die die Haken (52, 62) der Wandelemente (42) und/oder diejenigen der Abdeckleisten (60, 61) am Tragring (34) verriegelt.
